# EUROPÄISCHE PATENTANMELDUNG

(11) **EP 4 679 670 A1**
(43) Veröffentlichungstag der Anmeldung: **14.01.2026**
(21) Anmeldenummer: 25188775.8
(22) Anmeldetag: 10.07.2025
(51) Int. Cl.: H02J 7/00

(54) **ADAPTER ZUM LÖSBAREN VERBINDEN EINES AKKUPACKS MIT EINEM LADEGERÄT**

(30) Priorität: 10.07.2024 DE 102024119596
(71) Anmelder: Einhell Germany AG, 94405 Landau / Isar (DE)
(72) Erfinder: Mayr, Stefan, 84030 Landshut (DE)
(74) Vertreter: Canzler & Bergmeier Patentanwälte Partnerschaft mbB

(57) **Zusammenfassung**

Die Erfindung betrifft einen Adapter (2), mit dem ein Akkupack (3) lösbar mit einem Ladegerät (4) verbunden werden kann, mit einer Geräteschnittstelle (5) zum Verbinden des Ladegeräts (4) und/oder eines Elektrogeräts, mit einer Akkupackschnittstelle (6) zum Verbinden des Akkupacks (3), mit einer Stromleitung (9), die die Akkupackschnittstelle (6) und die Geräteschnittstelle (5) elektrisch miteinander verbindet, so dass zum Laden des Akkupacks (3) ein elektrischer Ladestrom vom Ladegerät (4) zum Akkupack (3) fließen kann. Erfindungsgemäß weist der Adapter (2) eine elektronische Adaptereinheit (10) auf, die einen Adapter-Laderegler (11) zum Steuern, Überwachen und/oder Beenden eines Ladevorgangs zum Laden des Akkupacks (3) umfasst.

## Beschreibung

Die vorliegende Erfindung betrifft einen Adapter, mit dem ein Akkupack lösbar mit einem Ladegerät und/oder einem Elektrogerät, insbesondere einem elektronischen Werkzeug und/oder Gartengerät, verbunden werden kann. Der Adapter umfasst eine Geräteschnittstelle zum Verbinden des Ladegeräts und/oder des Elektrogeräts, eine Akkupackschnittstelle zum Verbinden des Akkupacks und eine Stromleitung, die die Akkupackschnittstelle und die Geräteschnittstelle elektrisch miteinander verbindet, so dass zum Laden des Akkupacks ein elektrischer Ladestrom vom Ladegerät zum Akkupack fließen kann. Ferner betrifft die Erfindung ein System mit einem Akkupack und einem derartigen Adapter.

Die DE 10 2004 052 505 A1 offenbart eine Adaptervorrichtung für Ladegeräte von Ackus. Diese umfasst einen Kopplungsbereich zur Verbindung mit dem Ladegerät und eine Kontaktanordnung, die ein Kabel mit mindestens zwei Leitungen trägt. Das Kabel endet in einer Klemme mit Anschlüssen für nicht kompatible Akkumulatoren. Zudem gibt es Mittel zur Übertragung von Informationen und ein Codiermittel für die Übermittlung an das Ladegerät.

Aufgabe der vorliegenden Erfindung ist es, einen Adapter und/oder ein System, insbesondere aus zumindest einem Adapter und einem Akkupack, zu schaffen, mit dem die aus dem Stand der Technik bekannten Nachteile beseitigt werden können und/oder mit dem mehrere unterschiedliche Akkupacks und Ladegeräte, die zueinander elektronisch inkompatibel sind und/oder zueinander unterschiedliche elektrische Spezifikationen aufweisen, insbesondere sicher und/oder zuverlässig, betrieben werden können.

Die Aufgabe wird gelöst durch einen Adapter und/oder ein System mit den Merkmalen der unabhängigen Patentansprüche.

Vorgeschlagen wird ein Adapter, mit dem ein Akkupack lösbar mit einem Ladegerät und/oder einem Elektrogerät, insbesondere einem elektronischen Werkzeug und/oder Gartengerät, verbunden werden kann. Der Adapter weist eine Geräteschnittstelle auf, über die der Adapter lösbar mit einem Ladegerät oder einem Elektrogerät verbunden werden kann. Zusätzlich ist eine Akkupackschnittstelle zum Verbinden des Akkupacks vorhanden. Die Akkupackschnittstelle sorgt für eine mechanische und/oder elektronische Verbindung zwischen Akkupack und Adapter. Dies trägt zur sicheren Stromübertragung bei. Der Adapter weist eine Stromleitung auf, die die Akkupackschnittstelle und die Geräteschnittstelle elektrisch miteinander verbindet, so dass im bestimmungsgemäßen Gebrauch zum Laden des Akkupacks ein elektrischer Ladestrom vom Ladegerät zum Akkupack fließen kann. Der Adapter umfasst eine elektronische Adaptereinheit, die vorzugsweise einen Adapter-Laderegler zum Steuern, Überwachen und/oder Beenden eines Ladevorgangs zum Laden eines Akkupacks aufweist. Der Adapter-Laderegler gewährleistet eine präzise Steuerung des Ladevorgangs. Dies erhöht die Sicherheit und verlängert die Lebensdauer des Akkupacks. Vorteilhafterweise können somit elektronisch inkompatible Akkupacks und Ladegeräte über den Adapter sicher und effizient betrieben werden. Dies erhöht die Kompatibilität und reduziert die Notwendigkeit, mehrere Ladegeräte vorzuhalten. Dadurch werden Kosten und Platzbedarf reduziert. Der Adapter ermöglicht eine flexible und effiziente Nutzung von Akkupacks mit verschiedenen Geräten. Dies führt zu einer erhöhten Benutzerfreundlichkeit und Vielseitigkeit.

Vorteilhaft ist es, wenn die elektronische Adaptereinheit, insbesondere über zumindest eine erste Verbindungsleitung, elektrisch mit der Geräteschnittstelle und/oder, insbesondere über zumindest eine zweite Verbindungsleitung, elektrisch mit der Akkupackschnittstelle verbunden ist. Dies ermöglicht eine flexible und effiziente Datenkommunikation zwischen den Komponenten des Adapters und/oder zwischen dem Adapter selbst und dem im bestimmungsgemäßen Gebrauch an diesen angeschlossenen Akkupack und Ladegerät.

**In** einer vorteilhaften Weiterbildung der Erfindung umfasst die elektronische Adaptereinheit eine Identifikationseinheit, mit der im bestimmungsgemäßen Gebrauch ein mit der Geräteschnittstelle verbundenes Ladegerät und/oder ein mit der Akkupackschnittstelle verbundenes Akkupack, insbesondere anhand eines gerätespezifischen und/oder akkupackspezifischen Identifikationswertes, identifiziert werden kann. Diese Identifikationseinheit ermöglicht somit eine automatische Erkennung der verbundenen Geräte.

Vorteilhaft ist es, wenn die Identifikationseinheit derart ausgebildet ist, dass diese selbstständig erkennen kann, wenn im bestimmungsgemäßen Gebrauch ein Ladegerät mit der Geräteschnittstelle und/oder ein Akkupack mit der Akkupackschnittstelle verbunden ist. Dies reduziert den manuellen Aufwand und führt zu einer nahtlosen und komfortablen Nutzung.

Gemäß einer vorteilhaften Weiterbildung der Erfindung ist die Identifikationseinheit derart ausgebildet, dass diese den gerätespezifischen und/oder akkupackspezifischen Identifikationswert im bestimmungsgemäßen Gebrauch über die erste Verbindungsleitung, die zweite Verbindungsleitung und/oder über die Stromleitung, insbesondere selbstständig, ermitteln, anfordern, erhalten und/oder abgreifen kann. Diese Fähigkeit der Identifikationseinheit ermöglicht eine präzise und zuverlässige Identifikation des angeschlossenen Ladegeräts sowie des angeschlossenen Akkupacks.

Des Weiteren ist es vorteilhaft, wenn der gerätespezifische und/oder akkupackspezifische Identifikationswert ein gerätespezifischer und/oder akkupackspezifischer Messwert ist. Der Messwert ist vorzugsweise ein Widerstandswert eines elektrischen Widerstands des Ladegeräts und/oder des Akkupacks. Zusätzlich oder alternativ kann der Messwert ein Strommesswert des Ladegeräts und/oder des Akkupacks sein. In einer vorteilhaften Weiterbildung der Erfindung ist die Identifikationseinheit derart ausgebildet, dass diese den gerätespezifischen und/oder akkupackspezifischen Messwert im bestimmungsgemäßen Gebrauch, insbesondere selbstständig, ermitteln, insbesondere messen und/oder erfassen kann.

Darüber hinaus ist es vorteilhaft, wenn der gerätespezifische und/oder akkupackspezifische Identifikationswert eine Bitfolge und/oder ein elektrisches Signal, insbesondere ein Abschaltsignal, des an der Geräteschnittstelle angeschlossenen Ladegeräts und/oder Akkupacks ist. Vorgeschlagen wird, dass die Identifikationseinheit vorteilhafterweise derart ausgebildet ist, dass diese die Bitfolge und/oder das elektrische Signal des Ladegeräts und/oder Akkupacks im bestimmungsgemäßen Gebrauch anfordern, empfangen und/oder abfangen kann. Die Erfassung dieser Signale gewährleistet eine sichere und zuverlässige Kommunikation zwischen den Geräten. Dies erhöht die Betriebssicherheit und Zuverlässigkeit des Systems.

Darüber hinaus ist es vorteilhaft, wenn die Identifikationseinheit derart ausgebildet ist, dass diese im bestimmungsgemäßen Gebrauch den gerätespezifischen und/oder akkupackspezifischen Identifikationswert des angeschlossenen Ladegeräts und/oder Akkupacks mit mehreren Gerätekennwerten unterschiedlicher Ladegeräte und/oder Akkupacks, die vorzugsweise in einer Datenbank eines Datenspeichers abgespeichert sind, abgleichen kann. In diesem Zusammenhang ist es vorteilhaft, wenn die Identifikationseinheit bei Übereinstimmung zwischen Identifikationswert und Gerätekennwert das angeschlossene Ladegerät und/oder Akkupack identifizieren kann. Diese Vergleichsfunktion ermöglicht eine präzise Identifikation der Geräte. Dies erhöht die Sicherheit und Kompatibilität des Systems.

Vorteilhaft ist es, wenn die Datenbank und/oder der Datenspeicher updatefähig ist, insbesondere über eine Datenschnittstelle, mit der ein externes Gerät für den Updateprozess koppelbar ist.

Es ist vorteilhaft, wenn die elektronische Adaptereinheit eine Authentifizierungseinheit umfasst, mit der sich der Adapter im bestimmungsgemäßen Gebrauch beim verbundenen Ladegerät und/oder Akkupack, insbesondere anhand eines gerätespezifischen und/oder akkupackspezifischen Authentifizierungswertes, authentifizieren kann. Diese Authentifizierungseinheit gewährleistet die Nutzung des Adapters mit verschiedenen Ladegeräten und Akkupacks.

In einer vorteilhaften Weiterbildung der Erfindung ist die Authentifizierungseinheit derart ausgebildet, dass diese im bestimmungsgemäßen Gebrauch den gerätespezifischen und/oder akkupackspezifischen Authentifizierungswert des angeschlossenen Ladegeräts und/oder Akkupacks anhand des mit dem gerätespezifischen und/oder akkupackspezifischen Identifikationswert übereinstimmenden Gerätekennwerts ermitteln, insbesondere selektieren, kann. Dies ermöglicht eine schnelle und zuverlässige Authentifizierung. Der gerätespezifische Authentifizierungswert ist vorzugsweise gemeinsam mit dem korrespondierenden Gerätekennwert in der Datenbank des Datenspeichers abgespeichert.

Vorteilhafterweise ist die Authentifizierungseinheit derart ausgebildet, dass diese im bestimmungsgemäßen Gebrauch den ermittelten gerätespezifischen und/oder akkupackspezifischen Authentifizierungswert, insbesondere über die erste Verbindungsleitung und/oder zweite Verbindungsleitung, an das angeschlossene Ladegerät und/oder den angeschlossenen Akkupack übermitteln kann, um den Adapter beim angeschlossenen Ladegerät und/oder beim angeschlossenen Akkupack zu authentifizieren.

Darüber hinaus ist es vorteilhaft, wenn die elektronische Adaptereinheit eine Ladeparametereinheit umfasst, die im bestimmungsgemäßen Gebrauch zumindest einen Ladeparameter für den Ladevorgang zum Laden des angeschlossenen Akkupacks ermitteln und/oder festlegen kann. Die Ladeparametereinheit ermöglicht eine optimale Anpassung des Ladevorgangs an die spezifischen Anforderungen des Akkupacks und/oder Ladegeräts. Dies verbessert die Effizienz und Sicherheit des Ladevorgangs.

Vorteilhaft ist es, wenn der Ladeparameter ein Ladeverfahren, insbesondere ein Konstantstrom-Ladeverfahren, ein Konstantspannungs-Ladeverfahren und/oder ein Pulsladeverfahren, ist. Durch die Auswahl des geeigneten Ladeverfahrens kann die Lebensdauer des Akkupacks verlängert werden. Zusätzlich oder alternativ ist es vorteilhaft, wenn der Ladeparameter ein Abschaltkriterium, insbesondere eine Ladeschlussspannung, eine Abschalttemperatur, ein Abschaltzellendruck und/oder ein Abschaltspannungsverlauf, ist. Zusätzlich oder alternativ ist es vorteilhaft, wenn der Ladeparameter ein maximaler Ladestrom und/oder eine maximale Ladespannung ist. Zusätzlich oder alternativ ist es vorteilhaft, wenn der Ladeparameter ein Innenwiderstand zumindest einer einzelnen Zelle des Akkupacks ist. Dies trägt zur Leistungsoptimierung des gesamten Systems bei.

Es ist vorteilhaft, wenn die Ladeparametereinheit derart ausgebildet ist, dass diese den zumindest einen Ladeparameter anhand zumindest eines akkupackspezifischen Akkupack-Parameters des angeschlossenen Akkupacks und/oder anhand zumindest eines gerätespezifischen Ladegerät-Parameters des angeschlossenen Ladegeräts ermitteln und/oder festlegen kann. Diese Anpassung an die spezifischen Parameter der angeschlossenen Geräte gewährleistet eine effiziente und sichere Ladeumgebung. Dadurch wird der Ladevorgang optimal auf die jeweiligen Eigenschaften des Ladegeräts und/oder Akkupacks abgestimmt.

Vorteilhaft ist es, wenn der Ladegerät-Parameter ein Ladestrom und/oder eine Ladespannung und/oder ein erstes Laderegler-Merkmal eines Ladegerät-Ladereglers ist. Ein Laderegler-Merkmal kann beispielsweise das Vorhandensein eines Ladegerät-Ladereglers sein, ein Verhalten des Ladegerät-Ladereglers (Master oder Slave), ein mathematisches Ladereglermodell des Ladegerät-Ladereglers und/oder ein vom Ladegerät-Laderegler verwendetes Ladeverfahren. Die Berücksichtigung dieser Ladegerät-Parameter ermöglicht eine präzise Steuerung des Ladevorgangs durch den Adapter-Laderegler. Dies führt zu einer verbesserten Ladeleistung und Gerätesicherheit.

Darüber hinaus ist es vorteilhaft, wenn der Akkupack-Parameter ein Zellentyp, eine Zellenanzahl und/oder eine Zellenschaltung ist. Zusätzlich oder alternativ ist es vorteilhaft, wenn der Akkupack-Parameter ein Zustandsparameter, insbesondere eine Zellenkapazität, eine Zellentemperatur, eine Zellenspannung, ein Ladezustand und/oder ein Spannungsunterschied zwischen zumindest zwei Zellen ist. Zusätzlich oder alternativ ist es vorteilhaft, wenn der Akkupack-Parameter eine Entladeschlussspannung und/oder ein zweites Laderegler-Merkmal eines Akkupack-Ladereglers ist. Ein zweites Laderegler-Merkmal des angeschlossenen Akkupack-Ladereglers kann beispielsweise das Vorhandensein eines Akkupack-Ladereglers sein, ein Verhalten des Akkupack-Ladereglers (Master oder Slave) und/oder ein vom Akkupack-Laderegler verwendetes Ladeverfahren. Die Ermittlung dieser Parameter ermöglicht eine detaillierte Überwachung und Steuerung des Ladevorgangs durch den Adapter-Laderegler. Dies trägt zur Optimierung der Ladebedingungen bei und schützt den Akkupack vor Überladung und Überhitzung.

Darüber hinaus ist es vorteilhaft, wenn die Ladeparametereinheit derart ausgebildet ist, dass diese im bestimmungsgemäßen Gebrauch den zumindest einen Akkupack-Parameter und/oder Ladegerät-Parameter anhand des mit dem gerätespezifischen und/oder akkupackspezifischen Identifikationswert übereinstimmenden Gerätekennwerts ermitteln, insbesondere selektieren, kann. Vorteilhaft ist es, wenn der zumindest eine akkupackspezifische Akkupack-Parameter und/oder der zumindest eine gerätespezifische Ladegerät-Parameter vorzugsweise gemeinsam mit dem korrespondierenden Gerätekennwert in der Datenbank des Datenspeichers abgespeichert ist. Die Speicherung dieser Werte ermöglicht eine schnelle und zuverlässige Anpassung des Ladevorgangs an die spezifischen Anforderungen des angeschlossenen Akkupacks und Ladegeräts. Dies erhöht die Effizienz und Sicherheit des Ladevorgangs.

Es ist vorteilhaft, wenn die Ladeparametereinheit derart ausgebildet ist, dass diese im bestimmungsgemäßen Gebrauch den zumindest einen akkupackspezifischen Akkupack-Parameter und/oder gerätespezifischen Ladegerät-Parameter, insbesondere über die erste Verbindungsleitung und/oder zweite Verbindungsleitung, erhalten kann. **In** diesem Zusammenhang ist es vorteilhaft, wenn die Ladeparametereinheit derart ausgebildet ist, dass diese im bestimmungsgemäßen Gebrauch den zumindest einen akkupackspezifischen Akkupack-Parameter und/oder gerätespezifischen Ladegerät-Parameter über die erste Verbindungsleitung und/oder zweite Verbindungsleitung selbstständig ermitteln, insbesondere messen, kann. Zusätzlich oder alternativ ist es vorteilhaft, wenn die Ladeparametereinheit derart ausgebildet ist, dass diese im bestimmungsgemäßen Gebrauch den zumindest einen akkupackspezifischen Akkupack-Parameter und/oder gerätespezifischen Ladegerät-Parameter über die erste Verbindungsleitung und/oder zweite Verbindungsleitung vom angeschlossenen Gerät anfordern und/oder erhalten kann. Zusätzlich oder alternativ ist es vorteilhaft, wenn die Ladeparametereinheit derart ausgebildet ist, dass diese im bestimmungsgemäßen Gebrauch den zumindest einen akkupackspezifischen Akkupack-Parameter und/oder gerätespezifischen Ladegerät-Parameter über die erste Verbindungsleitung und/oder zweite Verbindungsleitung abgreifen kann. Diese Fähigkeit zur Ermittlung zumindest eines Akkupack-Parameters und/oder Ladegerät-Parameter ermöglicht eine Anpassung und kontinuierliche Überwachung des Ladevorgangs. Dies trägt zur Verbesserung der Sicherheit, Ladeeffizienz und zur Verlängerung der Akkupacklebensdauer bei.

Darüber hinaus ist es vorteilhaft, wenn die Ladeparametereinheit derart ausgebildet ist, dass diese im bestimmungsgemäßen Gebrauch den zumindest einen Ladeparameter an den Adapter-Laderegler übermitteln und/oder den Adapter-Laderegler initialisieren kann. Diese Übermittlung und/oder Initialisierung gewährleistet eine sichere und präzise Steuerung des Ladevorgangs durch den Adapter-Laderegler. Dies führt zu einer optimalen Ladeleistung und einer sicheren Handhabung der Akkupacks.

In einer vorteilhaften Weiterbildung der Erfindung ist der Adapter-Laderegler derart ausgebildet, dass dieser im bestimmungsgemäßen Gebrauch den Ladevorgang des angeschlossenen Akkupacks unter Berücksichtigung des zumindest einen Ladeparameters steuern, überwachen und/oder beenden kann. Dies ermöglicht eine kontrollierte und effiziente Durchführung des Ladevorgangs. Dadurch wird die Ladezeit verkürzt und die Sicherheit erhöht.

Es ist vorteilhaft, wenn der Adapter-Laderegler derart ausgebildet ist, dass dieser, insbesondere vor oder während des Ladevorgangs, zumindest einen akkupackspezifischen Akkupack-Parameter und/oder gerätespezifischen Ladegerät-Parameter, insbesondere über die erste Verbindungsleitung und/oder zweite Verbindungsleitung und/oder insbesondere selbstständig, ermitteln, insbesondere messen, anfordern, erhalten und/oder abgreifen, kann. Dies gewährleistet eine kontinuierliche Überwachung und Anpassung des Ladevorgangs an die aktuellen Bedingungen. Dadurch wird die Ladeeffizienz maximiert und die Sicherheit des Ladevorgangs gewährleistet.

Darüber hinaus ist es vorteilhaft, wenn der Adapter zum Erfassen des zumindest einen Akkupack-Parameters und/oder Ladegerät-Parameters zumindest ein Adapter-Erfassungsmittel, insbesondere einen Sensor und/oder ein Messelement, aufweist. Dieses Adapter-Erfassungsmittel ermöglicht eine präzise und zuverlässige Überwachung der Ladebedingungen, insbesondere des Ladestroms und/oder der Ladespannung. Dies trägt zur Optimierung des Ladevorgangs und zur Vermeidung von Schäden am Akkupack bei.

Vorgeschlagen wird, dass der Adapter-Laderegler derart ausgebildet ist, dass dieser im bestimmungsgemäßen Gebrauch, insbesondere in Abhängigkeit des zumindest einen - vorzugsweise von der Ladeparametereinheit übermittelten und/oder vom Adapter-Laderegler ermittelten - Akkupack-Parameters und/oder Ladegerät-Parameters, einen Soll-Ladestrom und/oder eine Soll-Ladespannung festlegen und/oder an das Ladegerät übermitteln kann. Diese Funktion ermöglicht eine präzise Steuerung des Ladevorgangs. Dadurch wird die Effizienz und Sicherheit des Ladevorgangs erhöht.

Es ist vorteilhaft, wenn der Adapter-Laderegler derart ausgebildet ist, dass dieser, wenn das angeschlossene Akkupack im bestimmungsgemäßen Gebrauch keinen Akkupack-Laderegler umfasst, den Ladestrom und/oder die Ladespannung steuert und/oder regelt und/oder im System als Master agiert.

Es ist vorteilhaft, wenn der Adapter-Laderegler derart ausgebildet ist, dass dieser, wenn das angeschlossene Akkupack im bestimmungsgemäßen Gebrauch einen Akkupack-Laderegler umfasst, den vom Akkupack-Laderegler angeforderten Ladestrom und/oder die angeforderte Ladespannung als Soll-Ladestrom und/oder Soll-Ladespannung, insbesondere unverändert, übernimmt und/oder festlegt und/oder gegenüber dem Akkupack-Laderegler als Slave agiert. Dies gewährleistet eine präzise Abstimmung zwischen Akkupack und Adapter, was die Effizienz des Ladevorgangs erhöht. Dadurch wird die Lebensdauer des Akkupacks verlängert und die Sicherheit des Ladeprozesses verbessert.

Darüber hinaus ist es vorteilhaft, wenn die elektronische Adaptereinheit eine, insbesondere dem Adapter-Laderegler in Richtung des Ladegeräts nachgeschaltete, Übersetzereinheit umfasst. Die Übersetzereinheit als Übersetzter für einen Ladegerät-Laderegler des Ladegeräts vorgesehen. Die Übersetzereinheit bewirkt, dass der Ladegerät-Laderegler einen derartigen Input erhält, dass dieser den vom Adapter-Laderegler gewünschten Ladestrom und/oder die vom Adapter-Laderegler gewünschte Ladespannung bereitstellt.

In diesem Zusammenhang ist es vorteilhaft, wenn die Übersetzereinheit derart ausgebildet ist, dass diese im bestimmungsgemäßen Gebrauch, insbesondere wenn das angeschlossene Ladegerät einen Ladegerät-Laderegler umfasst, anhand des gerätespezifischen Laderegler-Merkmals des Ladegerät-Ladereglers, insbesondere anhand des gerätespezifischen Ladereglermodells des Ladegerät-Ladereglers, den vom Adapter-Laderegler übermittelten Soll-Ladestrom und/oder die vom Adapter-Laderegler übermittelte Soll-Ladespannung in einen derart adaptierten Akkupack-Parameter übersetzt, dass ein vom Ladegerät-Laderegler an das Akkupack gelieferter Ist-Ladestrom und/oder eine vom Ladegerät-Laderegler an das Akkupack gelieferte Ist-Ladespannung dem vom Adapter-Laderegler festgelegten Soll-Ladestrom und/oder der vom Adapter-Laderegler festgelegten Soll-Ladespannung entspricht. Ferner ist die Übersetzereinheit vorzugsweise derart ausgebildet, dass diese den adaptierten Akkupack-Parameter an den Ladegerät-Laderegler übermittelt. Diese Anpassung ermöglicht es, dass der Ladegerät-Laderegler so agiert, wie es vom Adapter-Laderegler gewünscht wird und/oder für das Akkupack nötig ist.

Vorgeschlagen wird, dass die Übersetzereinheit derart ausgebildet ist, dass diese im bestimmungsgemäßen Gebrauch das gerätespezifische Laderegler-Merkmal, insbesondere das gerätespezifische Ladereglermodell, des Ladegerät-Ladereglers des angeschlossenen Ladegeräts anhand des mit dem gerätespezifischen Identifikationswert übereinstimmenden Gerätekennwerts ermitteln, insbesondere selektieren, kann. Hierfür ist das gerätespezifische Laderegler-Merkmal, insbesondere das gerätespezifische Ladereglermodell, vorzugsweise gemeinsam mit dem korrespondierenden Gerätekennwert in der Datenbank des Datenspeichers abgespeichert. Diese Fähigkeit zur automatischen Auswahl und Anpassung erhöht die Flexibilität und Effizienz des Adapters. Dies ermöglicht eine Kompatibilität mit einer Vielzahl von Ladegeräten.

Es ist vorteilhaft, wenn die elektronische Adaptereinheit den Datenspeicher mit der darin abgespeicherten Datenbank umfasst. Infolgedessen ist der Datenspeicher vorzugsweise in den Adapter integriert. Der Datenspeicher ermöglicht die schnelle und zuverlässige Speicherung und Abrufung der relevanten Daten. Dies trägt zur Verbesserung der Systemleistung bei. Alternativ kann der Datenspeicher auch extern zum Adapter angeordnet sein und/oder ein zusätzliches Element des Systems bilden. In diesem Fall verfügt der Adapter über eine, insbesondere kabelgebundene oder kabellose, Datenschnittstelle, über die er mit dem Datenspeicher kommunizieren kann.

Darüber hinaus ist es vorteilhaft, wenn in der Datenbank, insbesondere in der Form einer Liste, für eine Vielzahl von unterschiedlichen Ladegeräten und/oder Akkupacks die jeweiligen Gerätekennwerte mit den korrespondierenden gerätespezifischen und/oder akkupackspezifischen Daten abgespeichert sind. Diese umfassende Datensammlung ermöglicht insbesondere eine schnelle Identifikation und Anpassung zumindest eines Ladeparameters.

Vorteilhaft ist es, wenn der Adapter-Laderegler derart ausgebildet ist, dass dieser im bestimmungsgemäßen Gebrauch einen Adapter-Schalter, insbesondere einen MOSFET und/oder Sperrwandler, unter Berücksichtigung des zumindest einen gerätespezifischen Ladegerät-Parameters und/oder akkupackspezifischen Akkupack-Parameters, insbesondere zum Reduzieren und/oder Unterbrechen des Ist-Ladestroms und/oder der Ist-Ladespannung, schalten und/oder steuern kann. Der Adapter-Schalter ermöglicht eine präzise Kontrolle des Ladeprozesses, wodurch Überladung und Überhitzung vermieden werden. Dies trägt zur Sicherheit und Langlebigkeit des Akkupacks bei.

Es ist vorteilhaft, wenn der Adapter den Adapter-Schalter aufweist, der vorzugsweise in der Stromleitung angeordnet ist. Die Anordnung in der Stromleitung ermöglicht eine effektive Steuerung des Ladestroms und/oder der Ladespannung. Dies verbessert die Ladeeffizienz und erhöht die Sicherheit des Systems.

Darüber hinaus ist es vorteilhaft, wenn der Adapter eine Anzeige zum Anzeigen des Ladezustands des Akkupacks und/oder ein Betätigungselement zum Ein- und/oder Ausschalten der Anzeige aufweist. Diese Anzeige ermöglicht dem Benutzer eine einfache Überwachung des Ladezustands. Dies erhöht die Benutzerfreundlichkeit und informiert über den aktuellen Zustand des Akkupacks.

Vorteilhafterweise umfasst der Adapter zumindest eine Elektronikkomponente, insbesondere einen Microcontroller und/oder integrierten Schaltkreis, die die Adaptereinheit und/oder den Datenspeicher ausbildet.

Es ist vorteilhaft, wenn die Adaptereinheit einen UART-Microcontroller (Universal Asynchronous Receiver Transmitter) umfasst. Der UART-Microcontroller ermöglicht eine effiziente und zuverlässige Kommunikation zwischen den verschiedenen Komponenten des Systems. Dies verbessert die Gesamtleistung und Integration des Adapters.

Vorgeschlagen wird darüber hinaus ein System mit einem Adapter und einem Akkupack, das vorzugsweise noch ein Ladegerät umfasst. Der Adapter und/oder das Akkupack ist gemäß der vorangegangenen Beschreibung ausgebildet, wobei die genannten Merkmale einzeln oder in beliebiger Kombination vorhanden sein können. Dieses System bietet eine flexible und vielseitige Lösung für verschiedene Ladeanforderungen. Dies erhöht die Kompatibilität und Effizienz des Systems.

Vorgeschlagen wird ferner die Verwendung eines Akkupacks in einem System. Das Ackupack und das System sind hierbei vorzugsweise gemäß der vorangegangenen Beschreibung ausgebildet und/oder werden gemäß dieser verwendet, wobei die genannten Merkmale einzeln oder in beliebiger Kombination vorhanden sein können.

Vorgeschlagen wird des Weiteren ein Verfahren zum Betreiben eines Adapters und/oder eines Systems gemäß der vorangegangenen Beschreibung, wobei die genannten Verfahrensmerkmale einzeln oder in beliebiger Kombination vorhanden sein können.

Weitere Vorteile der Erfindung sind in den nachfolgenden Ausführungsbeispielen beschrieben. Es zeigt:

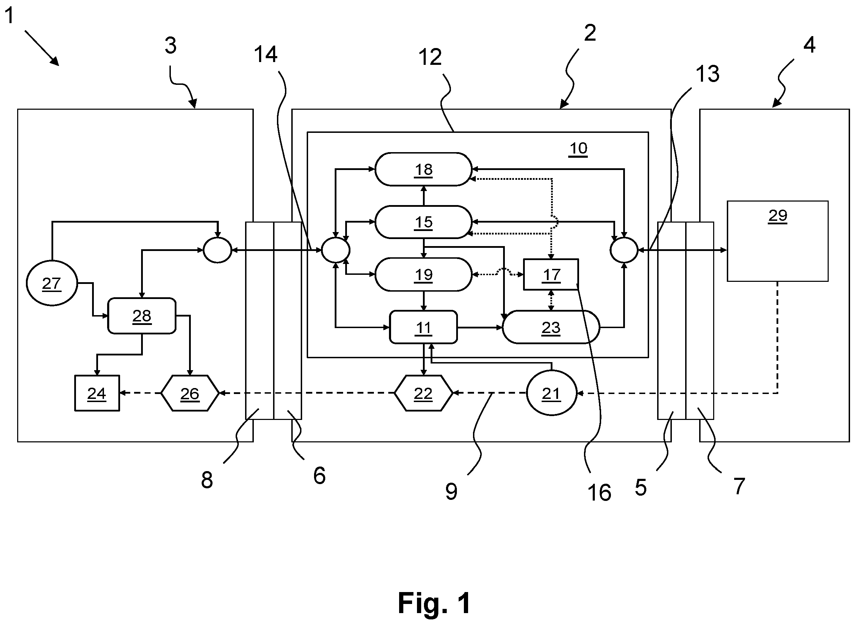

- **Figur 1**: einen Adapter zum lösbaren Verbinden eines Akkupacks mit einem Elektrogerät im bestimmungsgemäßen Gebrauch in einem ersten Ausführungsbeispiel eines Systems mit einem Akkupack ohne Akkupack-Laderegler und einem Ladegerät ohne Ladegerät-Laderegler als schematisches Blockschaltbild,

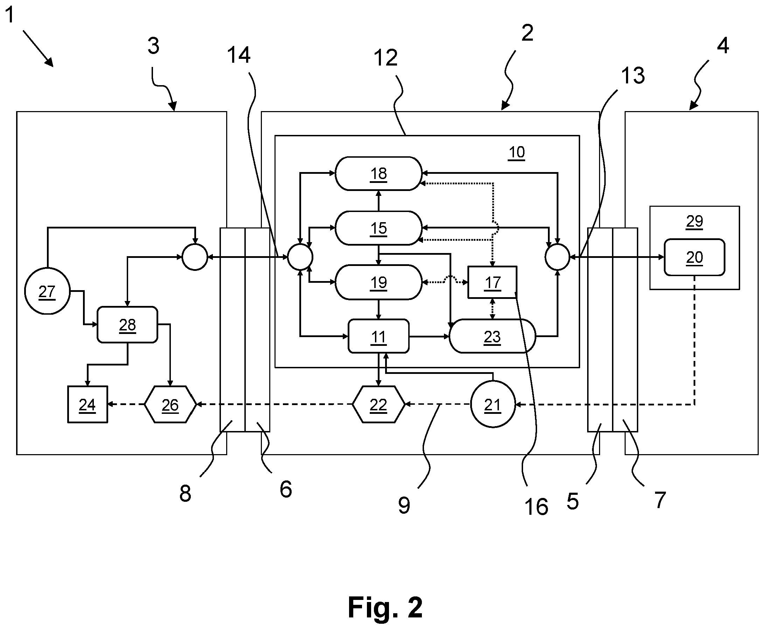

- **Figur 2**: den Adapter aus Figur 1 zum lösbaren Verbinden eines Akkupacks mit einem Elektrogerät im bestimmungsgemäßen Gebrauch in einem zweiten Ausführungsbeispiel eines Systems mit einem Akkupack ohne Akkupack-Laderegler und einem Ladegerät mit Ladegerät-Laderegler als schematisches Blockschaltbild,

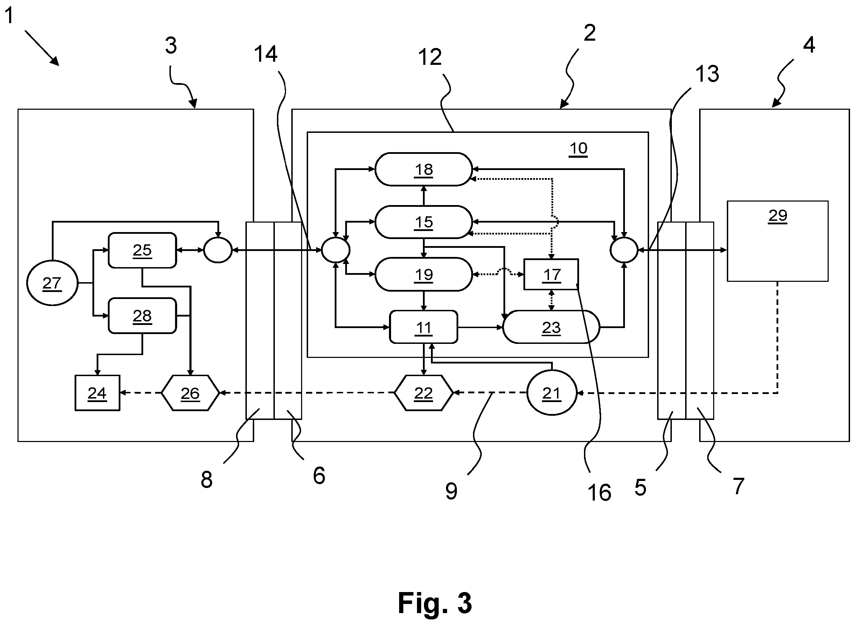

- **Figur 3**: den Adapter aus Figur 1 und 2 zum lösbaren Verbinden eines Akkupacks mit einem Elektrogerät im bestimmungsgemäßen Gebrauch in einem dritten Ausführungsbeispiel eines Systems mit einem Akkupack mit Akkupack-Laderegler und einem Ladegerät ohne Ladegerät-Laderegler als schematisches Blockschaltbild und

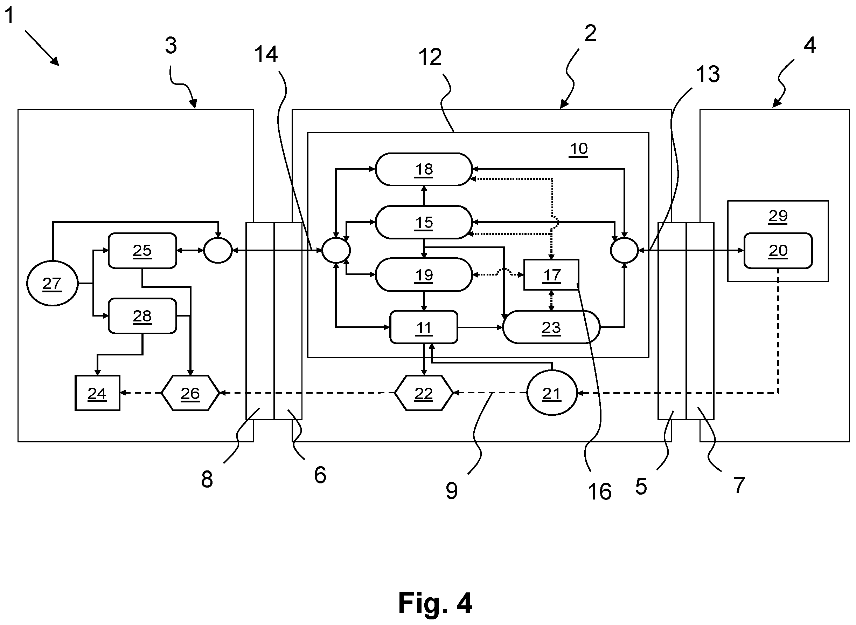

- **Figur 4**: den Adapter aus Figur 1, 2 und 3 zum lösbaren Verbinden eines Akkupacks mit einem Elektrogerät im bestimmungsgemäßen Gebrauch in einem vierten Ausführungsbeispiel eines Systems mit einem Akkupack mit Akkupack-Laderegler und einem Ladegerät mit Ladegerät-Laderegler als schematisches Blockschaltbild.

In den Figuren 1, 2, 3 und 4 ist ein Adapter 2 gezeigt, der dazu dient, einen Akkupack 3 lösbar mit einem Ladegerät 4 zu verbinden. Der Adapter 2 ermöglicht eine flexible und sichere Verbindung zwischen verschiedenen Ladegeräten 4 und verschiedenen Akkupacks 3, die zueinander elektronisch nicht kompatibel sind. Wie in den Figuren dargestellt ist der Adapter 2 im bestimmungsgemäßen Gebrauch Bestandteil eines Systems 1, insbesondere eines Ladesystems. Die Figuren 1, 2, 3 und 4 zeigen vier Ausführungsformen des Systems 1, bei denen die Ausgestaltung des Akkupacks 3 und des Ladegeräts 4 variieren, jedoch der Adapter 2 unverändert ist.

Das System 1 umfasst gemäß den Figuren 1, 2, 3 und 4 ein im bestimmungsgemäßen Gebrauch mit dem Adapter 1 gekoppeltes Akkupack 3. Ferner umfasst das System 1 gemäß den Figuren 1, 2, 3 und 4 ein im bestimmungsgemäßen Gebrauch mit dem Adapter 1 gekoppeltes Ladegerät 4. Der Adapter 2 ist dazu ausgebildet eine Vielzahl von unterschiedlichen Akkupacks 3 mit einer Vielzahl von unterschiedlichen Ladegeräten 4, die zueinander elektronisch nicht miteinander kompatibel sein können, sicher und zuverlässig zu laden.

Das Ladegerät 4 umfasst in den dargestellten Ausführungsbeispielen eine Ladegerät-Steuerung 29. Ferner umfasst das Ladegerät 4 in den in Figur 2 und 4 dargestellten Ausführungsbeispielen einen Ladegerät-Laderegler 20. Der Ladegerät-Laderegler 20 ist Bestandteil der Ladegerät-Steuerung 29. Für gewöhnlich agieren Ladegeräte 4, die über einen integrierten Ladegerät-Laderegler 20 verfügen, in einem Ladeverfahren als Master und deren korrespondierende Akkupacks 3 agieren untergeordnet als Slave. Es gibt aber auch vorliegend in den Figuren 1 und 3 dargestellte Ausführungsbeispiel von Ladegeräten 4, die keinen integrierten Ladegerät-Laderegler 20 aufweisen. In solchen Fällen ist der Ladegerät-Laderegler 20 in der Regel in das korrespondierende Akkupack 3 integriert, wie es in den Figuren 3 und 4 der Fall ist.

In dem in den Figuren 1 bis 4 dargestellten Ausführungsbeispielen umfasst das Akkupack 3 zumindest einen Akkumulator 24. Ferner weist das Akkupack 3 eine Akkupackschutzsteuerung 28, einen Akkupack-Schalter 26, insbesondere einen MOSFET, und/oder ein Akkupack-Erfassungsmittel 27, insbesondere einen Sensor, auf. Über das Akkupack-Erfassungsmittel 27 kann der Ist-Zustand des Akkupacks 3, insbesondere des Akkumulators 24, erfasst werden. Demnach können, insbesondere variable, Akkupack-Parameter, wie z.B. die Temperatur, die Kapazität, der Ladestrom, die Ladespannung und/oder der Ladezustand und/oder die Spannung einzelner Zellen und/oder der Innenwiderstand einzelner Zellen erfasst werden. Die Akkupackschutzsteuerung 28 ist derart ausgebildet, dass diese im bestimmungsgemäßen Gebrauch den Akkupack-Schalter 26 zum Unterbrechen und/oder Reduzieren eines Stromflusses schaltet, insbesondere öffnet und/oder steuert, wenn ein von dem zumindest einen Akkupack-Erfassungsmittel 27 erfasster Zustandsparameter einen Akkupack-Parameter übersteigt und/oder unterschreitet. Hierdurch kann der zumindest eine Akkumulator 24 geschützt werden. Alternativ kann das Akkupack 3 in einem vorliegend nicht dargestellten Ausführungsbeispiel aber auch ohne Akkupackschutzsteuerung 28, Akkupack-Schalter 26 und/oder Akkupack-Erfassungsmittel 27 ausgebildet sein.

Des Weiteren umfasst das Akkupack 3 in den in Figur 3 und 4 dargestellten Ausführungsbeispielen einen Akkupack-Laderegler 25, der beim Laden des Akkupacks 3 den Ladeprozess steuern, überwachen und/oder beenden kann. Für gewöhnlich agieren Ackupacks 3, die über einen derartigen Akkupack-Laderegler 25 verfügen, in einem Ladeverfahren als Master. Das Ladegerät 4 agiert dann untergeordnet als Slave. Bei solchen Akkupacks 3 ist die Akkupackschutzsteuerung 28 und der Akkupack-Laderegler 25 für gewöhnlich in einem Batteriemanagementsystem (BMS) vereint. Es gibt aber auch vorliegend in den Figuren 1 und 2 dargestellte Ausführungsbeispiele von Akkupacks 3, die keinen integrierten Akkupack-Laderegler 25 aufweisen. In solchen Fällen ist der Akkupack-Laderegler 25 in der Regel in das korrespondierende Ladegerät 4 integriert, wie dies bei den in Figur 2 und 4 dargestellten Ausführungsbeispielen zutrifft.

Dementsprechend ergeben sich folgende unterschiedliche Gerätekonstellationen bzw. Systeme 1, insbesondere Ladesysteme:
a) Akkupack 3 ohne Akkupack-Laderegler 25 + Ladegerät 4 ohne Ladegerät-Laderegler 20, wie in Figur 1 dargestellt;
b) Akkupack 3 ohne Akkupack-Laderegler 25 + Ladegerät 4 mit Ladegerät-Laderegler 20, wie in Figur 2 dargestellt;
c) Akkupack 3 mit Akkupack-Laderegler 25 + Ladegerät 4 ohne Ladegerät-Laderegler 20, wie in Figur 3 dargestellt;
d) Akkupack 3 mit Akkupack-Laderegler 25 + Ladegerät 4 mit Ladegerät-Laderegler 20, wie in Figur 4 dargestellt.

Bezugnehmend auf die Figuren 1, 2, 3 und 4 umfasst der Adapter 2 eine Geräteschnittstelle 5, die für die Verbindung mit dem Ladegerät 4 vorgesehen ist. An dieser Geräteschnittstelle 5 kann auch ein vorliegend nicht dargestelltes Elektrogerät, insbesondere ein elektronisches Werkzeug und/oder Gartengerät, angeschlossen und betrieben werden. Die Geräteschnittstelle 5 stellt eine stabile und zuverlässige Verbindung sicher. Dies gewährleistet eine konsistente Stromübertragung. Die Geräteschnittstelle 5 ist zu einer Geräteschnittstelle 7 des Ladegeräts 4 elektronisch und/oder mechanisch korrespondierend und kompatibel ausgebildet.

Zusätzlich weist der Adapter 2 eine Akkupackschnittstelle 6 auf, die zum Verbinden eines Akkupacks 3 dient. Die Akkupackschnittstelle 6 ermöglicht eine sichere und einfache Handhabung beim Einsetzen und Entfernen des Akkupacks 3. Dadurch wird der Ladevorgang effizient und benutzerfreundlich gestaltet. Die Akkupackschnittstelle 6 ist zu einer Akkupackschnittstelle 8 des Akkupacks 3 elektronisch und/oder mechanisch korrespondierend und kompatibel ausgebildet.

Gemäß den Figuren ist im Adapter 2 eine Stromleitung 9 angeordnet, die die Akkupackschnittstelle 6 und die Geräteschnittstelle 5 des Adapters 2 elektrisch miteinander verbindet. Die Stromleitung 9 ermöglicht es, dass ein elektrischer Ladestrom vom Ladegerät 4 zum Akkupack 3 fließen kann und/oder dass eine elektrische Ladespannung angelegt werden kann, um den Akkupack 3 zu laden.

Das in den Figuren 1, 2, 3 und 4 dargestellte Ausführungsbeispiel zeigt ferner eine elektronische Adaptereinheit 10 des Adapters 2. Vorzugsweise ist die Adaptereinheit 10 in den Adapter 2 integriert. Die Integration der elektronischen Adaptereinheit 10 ermöglicht eine kompakte Bauweise und reduziert den Platzbedarf. Dies trägt zur Portabilität und Handhabung des Adapters 2 bei.

Wie aus dem in den Figuren dargestellten Ausführungsbeispiel des Adapters 2 hervorgeht, ist die elektronische Adaptereinheit 10 über eine erste Verbindungsleitung 13 elektrisch mit der Geräteschnittstelle 5 verbunden. Die erste Verbindungsleitung 13 sorgt für eine stabile Datenübertragung zwischen der elektronischen Adaptereinheit 10 und der Geräteschnittstelle 5. Zusätzlich ist die elektronische Adaptereinheit 10 über eine zweite Verbindungsleitung 14 elektrisch mit der Akkupackschnittstelle 6 verbunden. Die erste und zweite Verbindungsleitung 13, 14 gewährleistet die effiziente Übertragung von Ladeinformationen und Ladebefehlen.

Die elektronische Adaptereinheit 10 umfasst eine Identifikationseinheit 15. Diese Identifikationseinheit 15 ermöglicht es, im bestimmungsgemäßen Gebrauch ein mit der Geräteschnittstelle 5 verbundenes Ladegerät 4 und/oder ein mit der Akkupackschnittstelle 6 verbundenes Akkupack 3 zu identifizieren. Die Identifikationseinheit 15 erhöht die Kompatibilität und Vielseitigkeit des Adapters 2. Dies ermöglicht die Nutzung des Adapters 2 mit verschiedenen Ladegeräten 4 und Akkupacks 3. Die Identifikation erfolgt anhand eines gerätespezifischen und/oder akkupackspezifischen Identifikationswertes, der von der Identifikationseinheit 15 ermittelt wird. Der gerätespezifische Identifikationswert sorgt dafür, dass nur kompatible Ladegeräte 4 und Akkupacks 3 verbunden werden. Dies schützt vor Fehlfunktionen und Schäden.

Die Identifikationseinheit 15 ist so ausgebildet, dass sie selbstständig erkennt, wenn ein Ladegerät 4 mit der Geräteschnittstelle 5 und/oder ein Akkupack 3 mit der Akkupackschnittstelle 6 verbunden ist. Dies automatisiert den Erkennungsprozess und reduziert den manuellen Aufwand. Eine automatisierte Erkennung erhöht die Benutzerfreundlichkeit und minimiert Fehlerquellen. Die Identifikationseinheit 15 kann den gerätespezifischen und/oder akkupackspezifischen Identifikationswert über die erste Verbindungsleitung 13, die zweite Verbindungsleitung 14 und/oder über die Stromleitung 9 ermitteln, anfordern, erhalten und/oder abgreifen.

Der gerätespezifische und/oder akkupackspezifische Identifikationswert kann ein Messwert sein, beispielsweise ein Widerstandswert eines elektrischen Widerstands des Ladegeräts 4 und/oder des Akkupacks 3 oder ein Strommesswert des Ladegeräts 4 und/oder des Akkupacks 3. Die Verwendung von Messwerten ermöglicht eine präzise und zuverlässige Identifikation. Dies trägt zur Sicherheit und Effizienz des Ladevorgangs bei. Die Identifikationseinheit 15 ist in der Lage, diesen Messwert selbstständig zu ermitteln, zu messen und/oder zu erfassen. Dies erhöht die Autonomie des Adapters 2 und reduziert die Notwendigkeit manueller Eingriffe. Eine selbstständige Messwertermittlung verbessert die Genauigkeit und Zuverlässigkeit der Identifikation.

Zusätzlich oder alternativ kann der gerätespezifische und/oder akkupackspezifische Identifikationswert eine Bitfolge und/oder ein elektrisches Signal, insbesondere ein Abschaltsignal, des an der Geräteschnittstelle 5 angeschlossenen Ladegeräts 4 und/oder Akkupacks 3 sein. Die Verwendung von Bitfolgen und elektrischen Signalen ermöglicht eine schnelle und sichere Identifikation. Die Identifikationseinheit 15 kann diese Bitfolge und/oder das elektrische Signal des Ladegeräts 4 und/oder Akkupacks 3 anfordern, empfangen und/oder abfangen. Dies erhöht die Flexibilität und Anpassungsfähigkeit des Adapters 2 an verschiedene Kommunikationsprotokolle und somit an viele unterschiedliche Akkupacks 3 und/oder Ladegeräte 4. Eine flexible Signalverarbeitung verbessert die Kompatibilität mit verschiedenen Geräten.

Die Identifikationseinheit 15 ist ferner in der Lage, den gerätespezifischen und/oder ackupackspezifischen Identifikationswert des angeschlossenen Ladegeräts 4 und/oder Akkupacks 3 mit mehreren Gerätekennwerten unterschiedlicher Ladegeräte 4 und/oder Akkupacks 3 abzugleichen. Dies ermöglicht eine genaue Zuordnung und Identifikation der angeschlossenen Komponenten. Ein Abgleich mit verschiedenen Gerätekennwerten erhöht die Genauigkeit und Sicherheit des Identifikationsprozesses. Diese Gerätekennwerte sind vorzugsweise in einer Datenbank 17 eines Datenspeichers 16 gespeichert. Eine zentrale Datenbank 17 ermöglicht eine einfache Aktualisierung und Verwaltung der Gerätekennwerte. Dies verbessert die Skalierbarkeit und Wartbarkeit des Systems. In dem in den Figuren dargestellten Ausführungsbeispiel des Adapters 2 umfasst die elektronische Adaptereinheit 10 den Datenspeicher 16 mit der darin abgespeicherten Datenbank 17. Alternativ könnte der Datenspeicher 16 in einem vorliegend nicht dargestellten Ausführungsbeispiel aber außerhalb des Adapters 2 angeordnet sein und/oder ein zusätzliches Element des Systems 1 bilden. In diesem Fall würde der Adapter 2 über eine, insbesondere kabelgebundene oder kabellose, Datenschnittstelle verfügen, über die er mit dem Datenspeicher 16 kommunizieren könnte.

Die Identifikationseinheit 15 identifiziert das angeschlossene Akkupack 3 und/oder das angeschlossene Ladegerät 4, sobald sie eine Übereinstimmung zwischen dem Identifikationswert und einem der abgespeicherten Gerätekennwert feststellt. Dies stellt sicher, dass nur mit dem Adapter 2 kompatible Akkupacks 3 und/oder Ladegeräte 4 betrieben werden können. Eine korrekte Identifikation verhindert Fehlfunktionen und schützt die Geräte vor Schäden.

Von dem angeschlossenen Akkupack 3 und/oder Ladegerät 4 kann in manchen Fällen eine Authentifizierung gefordert werden. Zu diesem Zweck umfasst die elektronische Adaptereinheit 10 eine Authentifizierungseinheit 18. Diese Authentifizierungseinheit 18 ermöglicht es, dass sich der Adapter 2 im bestimmungsgemäßen Gebrauch beim verbundenen Ladegerät 4 und/oder Akkupack 3 authentifizieren kann. Die Authentifizierungseinheit 18 sorgt demnach dafür, dass nach erfolgreicher Authentifizierung die Interaktion mit dem Adapter 2 von dem angeschlossenen Akkupack 3 und/oder Ladegerät 4 erlaubt wird.

Die Authentifizierung erfolgt anhand eines gerätespezifischen und/oder akkupackspezifischen Authentifizierungswertes. Dieser ist in der Datenbank 17 des Datenspeichers 16 gemeinsam mit dem Gerätekennwert abgespeichert. Die Authentifizierungseinheit 18 ist derart ausgebildet, dass sie im bestimmungsgemäßen Gebrauch den gerätespezifischen und/oder akkupackspezifischen Authentifizierungswert des angeschlossenen Ladegeräts 4 und/oder Akkupacks 3 anhand des mit dem gerätespezifischen und/oder ackupackspezifischen Identifikationswert übereinstimmenden Gerätekennwerts ermitteln kann. Dafür ist der gerätespezifische Authentifizierungswert, wie bereits vorstehend erwähnt, gemeinsam mit dem korrespondierenden Gerätekennwert in der Datenbank 17 des Datenspeichers 16 abgespeichert und muss von der Authentifizierungseinheit 18 lediglich selektiert werden. Dies ermöglicht eine schnelle und effiziente Authentifizierung durch Zugriff auf vordefinierte Daten. Eine zentrale Speicherung vereinfacht die Verwaltung und Aktualisierung der Authentifizierungswerte.

Nachdem die Authentifizierungseinheit 18 den gerätespezifischen und/oder akkupackspezifischen Authentifizierungswert ermittelt hat, übermittelt diese den Authentifizierungswert, insbesondere über die erste Verbindungsleitung 13 und/oder über die zweite Verbindungsleitung 14, an das angeschlossene Ladegerät 4 und/oder den angeschlossenen Akkupack 3. Hierdurch wird der Adapter 2 beim angeschlossenen Ladegerät 4 und/oder beim angeschlossenen Akkupack 3 authentifiziert und für weitere Interaktionen zugelassen.

Die elektronische Adaptereinheit 10 umfasst einen Adapter-Laderegler 11, der zum Steuern, Überwachen und/oder Beenden eines Ladevorgangs dient. Der Adapter-Laderegler 11 gewährleistet eine präzise Steuerung des Ladevorgangs. Dies schützt den Ackupack 3 vor Überladung und Überhitzung. Dieser Adapter-Laderegler 11 ist dafür verantwortlich, den Ladevorgang des Akkupacks 3 sicher und effizient durchzuführen. Dies erhöht die Sicherheit und Zuverlässigkeit des gesamten Systems 1. Eine effiziente Steuerung des Ladevorgangs maximiert die Ladegeschwindigkeit und minimiert die Ladezeit.

Das Steuern, Überwachen und/oder Beenden eines Ladevorgangs wird vom Adapter-Laderegler 11 in Abhängigkeit und/oder unter Berücksichtigung zumindest eines Ladeparameters vorgenommen. Dieser zumindest eine Ladeparameter kann bei unterschiedlichen Akkupacks 3 und/oder Ladegeräten 4 variieren. Aufgrund dessen umfasst die elektronische Adaptereinheit 10 eine Ladeparametereinheit 19. Diese Ladeparametereinheit 19 kann im bestimmungsgemäßen Gebrauch zumindest einen Ladeparameter für den Ladevorgang zum Laden des angeschlossenen Akkupacks 3 ermitteln und/oder festlegen bzw. dem Adapter-Laderegler 11 übergeben und/oder vorgeben. Die Festlegung von Ladeparametern optimiert den Ladevorgang für unterschiedliche Akkupacks 3 und Ladegeräte 4. Dies trägt zu einer verlängerten Lebensdauer und Leistungsfähigkeit des geladenen Akkupacks 3 sowie zu einer höheren Ladesicherheit bei.

Ein Ladeparameter kann beispielsweise ein Ladeverfahren sein. Besonders vorteilhaft sind hierbei das Konstantstrom-Ladeverfahren, das Konstantspannungs-Ladeverfahren und/oder das Pulsladeverfahren. Diese Ladeverfahren bieten unterschiedliche Vorteile hinsichtlich Ladegeschwindigkeit und Akkuschonung. Eine flexible Wahl der Ladeverfahren ermöglicht eine Anpassung an spezifische Anforderungen und Zustände des angeschlossenen Akkupacks 3. Darüber hinaus kann der Ladeparameter ein Abschaltkriterium, wie beispielsweise eine Ladeschlussspannung, eine Abschalttemperatur, ein Abschaltzellendruck und/oder ein Abschaltspannungsverlauf, sein. Die Berücksichtigung von Abschaltkriterien verhindert eine Überladung und schützt den zumindest einen Akkumulator 24 des angeschlossenen Akkupacks 3 vor Beschädigungen. Dies erhöht die Sicherheit und Zuverlässigkeit des Ladevorgangs. Auch kann der Ladeparameter ein, insbesondere maximaler, Ladestrom und/oder eine, insbesondere maximale, Ladespannung sein. Ein definierter maximaler Ladestrom und/oder eine definierte maximale Ladespannung verhindert eine Überlastung des Akkupacks 3 und des Ladegeräts 4. Dies sorgt für eine gleichmäßige und schonende Ladung. Auch kann der Ladeparameter eine Verhaltensanweisung für den Adapter-Laderegler 11 sein. Eine derartige Verhaltensanweisung könnte beispielsweise sein, dass, wenn das Akkupack 3 gemäß der in Figur 3 und 4 dargestellten Ausführungsbeispiele des Systems 1 einen Akkupack-Laderegler 25 umfasst, der Adapter-Laderegler 11 den vom Akkupack-Laderegler 25 angeforderten Ladestrom und/oder die vom Akkupack-Laderegler 25 angeforderte Ladespannung entweder gemäß Figur 3 unverändert an die Ladegerät-Steuerung 29 des Ladegeräts 4 oder gemäß Figur 4 von der Übersetzereinheit 23 in einen adaptierten Akkupack-Parameter übersetzt an den Akkupack-Laderegler 25 des Ladegeräts 4 weitergeben soll.

Die Ladeparametereinheit 19 ist derart ausgebildet, dass sie den zumindest einen Ladeparameter anhand zumindest eines akkupackspezifischen Akkupack-Parameters des angeschlossenen Akkupacks 3 und/oder anhand zumindest eines gerätespezifischen Ladegerät-Parameters des angeschlossenen Ladegeräts 4 ermitteln und/oder festlegen kann. Der Akkupack-Parameter kann beispielsweise ein Zellentyp, eine Zellenanzahl, eine Zellenschaltung, eine Zellenkapazität, eine Zellentemperatur, eine Zellenspannung, ein Ladezustand, ein Spannungsunterschied zwischen zumindest zwei Zellen, eine Entladeschlussspannung und/oder ein zweites Laderegler-Merkmal des Akkupack-Ladereglers 25 des Akkupacks 3 sein. Der Ladegerät-Parameter kann beispielsweise ein Ladestrom und/oder eine Ladespannung und/oder ein erstes Laderegler-Merkmal eines Ladegerät-Ladereglers 20 sein. Ein präziser Ladestrom und/oder eine präzise Ladespannung trägt zur Schonung der Akkuzellen bei und erhöht deren Lebensdauer. Die Berücksichtigung spezifischer Parameter gewährleistet eine optimale Anpassung des Ladevorgangs an die individuellen Eigenschaften des Akkupacks 3 und des Ladegeräts 4. Dies führt zu einer effizienten und sicheren Ladung.

Die Ladeparametereinheit 19 ist außerdem so ausgebildet, dass sie im bestimmungsgemäßen Gebrauch den zumindest einen Akkupack-Parameter und/oder Ladegerät-Parameter anhand des mit dem gerätespezifischen und/oder akkupackspezifischen Identifikationswert übereinstimmenden Gerätekennwerts ermitteln kann. Dies gewährleistet eine präzise Anpassung des Ladevorgangs an die spezifischen Anforderungen des angeschlossenen Akkupacks 3 und Ladegeräts 4. Eine genaue Parameterermittlung optimiert die Ladeeffizienz und die Akkulebensdauer. Diese Parameter, d.h. Akkupack-Parameter und/oder Ladegerät-Parameter, sind gemeinsam mit dem korrespondierenden Gerätekennwert in der Datenbank 17 des Datenspeichers 16 abgespeichert. Eine zentrale Speicherung ermöglicht auch in diesem Fall einen schnellen Zugriff und eine einfache Verwaltung der Parameterdaten. Dies verbessert die Effizienz und Genauigkeit des Ladevorgangs.

Die Ladeparametereinheit 19 ist auch dazu in der Lage, im bestimmungsgemäßen Gebrauch den zumindest einen akkupackspezifischen Akkupack-Parameter und/oder gerätespezifischen Ladegerät-Parameter, insbesondere über die erste Verbindungsleitung 13 und/oder die zweite Verbindungsleitung 14 und/oder selbstständig, zu ermitteln, insbesondere zu messen, anzufordern, zu erhalten und/oder abzugreifen. Dies erhöht die Flexibilität und Autonomie der Ladeparametereinheit 19 bei der Ermittlung der relevanten Parameter. Eine selbstständige Messung und Erfassung der Parameter minimiert den manuellen Aufwand und erhöht die Genauigkeit.

Die Ladeparametereinheit 19 kann im bestimmungsgemäßen Gebrauch den zumindest einen Ladeparameter an den Adapter-Laderegler 11 übermitteln und/oder den Adapter-Laderegler 11 initialisieren. Dies ermöglicht eine präzise und automatisierte Steuerung des Ladevorgangs durch den Adapter-Laderegler 11. Eine Initialisierung des Adapter-Ladereglers 11 gewährleistet eine sofortige und korrekte Anwendung der Ladeparameter.

Der Adapter-Laderegler 11 ist derart ausgebildet, dass er im bestimmungsgemäßen Gebrauch den Ladevorgang des angeschlossenen Akkupacks 3 unter Berücksichtigung des zumindest einen Ladeparameters steuern, überwachen und/oder beenden kann. Eine genaue Steuerung des Ladevorgangs erhöht die Ladeeffizienz und schützt das Ackupack 3 vor Schäden. Dies verbessert die Gesamtleistung und Zuverlässigkeit des Systems 1.

Während des Ladevorgangs kann der Adapter-Laderegler 11 zumindest einen akkupackspezifischen Akkupack-Parameter und/oder gerätespezifischen Ladegerät-Parameter, insbesondere über die erste Verbindungsleitung 13 und/oder die zweite Verbindungsleitung 14 und/oder insbesondere selbstständig, ermitteln, insbesondere messen, anfordern, erhalten und/oder abgreifen. Dies ermöglicht eine kontinuierliche Anpassung und Überwachung des Ladevorgangs in Echtzeit. Eine kontinuierliche Überwachung stellt sicher, dass der Ladevorgang jederzeit optimal verläuft.

Der Adapter 2 ist in dem in Figur 1, 2, 3 und 4 dargestellten Ausführungsbeispiel zum Erfassen des zumindest einen Akkupack-Parameters und/oder Ladegerät-Parameters mit zumindest einem Adapter-Erfassungsmittel 21 ausgestattet. Dieses zumindest eine Adapter-Erfassungsmittel 21 gewährleistet eine präzise Erfassung aller relevanten Parameter, insbesondere des Ist-Ladestroms und/oder der Ist-Ladespannung. Dies ermöglicht eine genaue Steuerung und Überwachung des Ladevorgangs. Dieses Adapter-Erfassungsmittel 21 umfasst insbesondere einen Sensor und/oder ein Messelement. Die Verwendung von Sensoren und Messelementen sorgt für eine hohe Messgenauigkeit und Zuverlässigkeit. Dies trägt zur Sicherheit und Effizienz des Ladevorgangs bei.

Der Adapter-Laderegler 11 ist so ausgelegt, dass er im bestimmungsgemäßen Gebrauch, insbesondere in Abhängigkeit des, von der Ladeparametereinheit 19 erhaltenen, zumindest einen Akkupack-Parameters und/oder Ladegerät-Parameters, einen Soll-Ladestrom und/oder eine Soll-Ladespannung festlegen kann. Ferner kann der Adapter-Laderegler 11 im bestimmungsgemäßen Gebrauch diesen Soll-Ladestrom und/oder diese Soll-Ladespannung über eine zwischengeschaltete Übersetzereinheit 23 - auf die nachfolgend im Detail eingegangen wird - an das Ladegerät 4 übermitteln. Dies ermöglicht eine optimale Anpassung des Ladevorgangs an die spezifischen Anforderungen des Akkupacks 3 und Ladegeräts 4. Eine präzise Festlegung des Soll-Ladestroms und/oder der Soll-Ladespannung durch den Adapter gewährleistet eine schonende und effiziente Ladung.

Der Adapter-Laderegler 11 ist ebenfalls in der Lage, den vom Akkupack-Laderegler 25 angeforderten Ladestrom und/oder die vom Akkupack-Laderegler 25 angeforderte Ladespannung als Soll-Ladestrom und/oder Soll-Ladespannung festzulegen, wenn das angeschlossene Akkupack 3 einen Akkupack-Laderegler 25 umfasst. Diese Funktion erhöht die Flexibilität des Adapters 2, indem sie die Anpassung an verschiedene Akkupack-Typen ermöglicht. Eine flexible Anpassung sorgt für eine optimale Ladeleistung und schützt die Akkumulatoren 24 vor Schäden.

Die elektronische Adaptereinheit 10 umfasst die dem Adapter-Laderegler 11 im Informationsfluss in Richtung des Ladegeräts 4 nachgeschaltete Übersetzereinheit 23. Diese Übersetzereinheit 23 ermöglicht die Kompatibilität zwischen unterschiedlichen Ladegeräten 4 und Akkupacks 3. Sie ist im bestimmungsgemäßen Gebrauch dafür ausgelegt, wenn das angeschlossene Ladegerät 4, wie in den in Figur 3 und 4 dargestellten Ausführungsbeispiel des Systems 1, einen Ladegerät-Laderegler 20 umfasst, anhand eines gerätespezifischen Ladegerät-Parameters, insbesondere anhand eines gerätespezifischen Ladereglermodells, des Ladegerät-Ladereglers 20, den vom Adapter-Laderegler 11 übermittelten Soll-Ladestrom und/oder die vom Adapter-Laderegler 11 übermittelte Ladespannung in einen adaptierten Akkupack-Parameter zu übersetzen. Der adaptierte Akkupack-Parameter wird hierbei von der Übersetzereinheit 23 unter Berücksichtigung des Ladereglermodells des Ladegerät-Ladereglers 20 derart angepasst, dass ein vom Ladegerät-Laderegler 20 des angeschlossenen Ladegeräts 4 an das Ackupack 3 gelieferter Ist-Ladestrom und/oder eine vom Ladegerät-Laderegler 20 des angeschlossenen Ladegeräts 4 an das Akkupack 3 gelieferte Ladespannung dem vom Adapter-Laderegler 11 übermittelten Soll-Ladestrom und/oder der vom Adapter-Laderegler 11 übermittelten Soll-Ladespannung entspricht. Der Ladegerät-Laderegler 20 wird hierdurch zum Slave. Dies sorgt für eine genaue Anpassung des Ladestroms und/oder der Soll-Ladespannung an die spezifischen Anforderungen des Ladegeräts 4 und Akkupacks 3. Eine präzise Übersetzung der Ladeparameter erhöht die Ladeeffizienz und reduziert das Risiko von Überladung. Dies stellt sicher, dass der tatsächlich gelieferte Ladestrom und/oder die tatsächlich gelieferte Ladespannung optimal auf den Bedarf des Akkupacks 3 abgestimmt ist. Eine genaue Übereinstimmung zwischen dem vom Adapter-Laderegler 11 festgelegten Soll-Ladestrom und/oder der vom Adapter-Laderegler 11 festgelegten Ladespannung und dem vom Ladegerät-Laderegler 20 tatsächlich bereitgestellten Ist-Ladestrom und/oder Ist-Ladespannung erhöht die Lebensdauer und Leistung des Akkupacks 3.

Die Übersetzereinheit 23 ist zudem so konzipiert, dass sie im bestimmungsgemäßen Gebrauch den zumindest einen Ladegerät-Parameter, nämlich insbesondere das gerätespezifische Ladereglermodell des Ladegerät-Ladereglers 20 des angeschlossenen Ladegeräts 4, anhand des mit dem gerätespezifischen Identifikationswert übereinstimmenden Gerätekennwerts ermitteln kann. Dies ermöglicht eine präzise Anpassung der Ladeparameter an das spezifische Ladegerät 4. Eine genaue Ermittlung des Ladereglermodells verbessert die Effizienz und Zuverlässigkeit des Ladevorgangs. Besonders vorteilhaft ist hierbei, dass der zumindest eine Ladegerät-Parameter, nämlich insbesondere das gerätespezifische Ladereglermodell des Ladegerät-Ladereglers 20 des angeschlossenen Ladegeräts 4, gemeinsam mit dem korrespondierenden Gerätekennwert in der Datenbank 17 des Datenspeichers 16 abgespeichert ist. Eine zentrale Speicherung vereinfacht die Verwaltung und Aktualisierung der Ladereglermodelle. Dies erhöht die Flexibilität und Anpassungsfähigkeit des Adapters 2.

**In** dem in den Figuren 1, 2, 3 und 4 dargestellten Ausführungsbeispiel umfasst die elektronische Adaptereinheit 10 den Datenspeicher 16 mit der darin abgespeicherten Datenbank 17. Der Datenspeicher 16 ermöglicht eine effiziente Verwaltung und schnellen Zugriff auf die gespeicherten Daten. Eine zentrale Datenbank erleichtert die Wartung und Aktualisierung der Geräte- und Akkupackinformationen. **In** dieser Datenbank 17 sind, insbesondere in einer Liste, für eine Vielzahl von unterschiedlichen Ladegeräten 4 und/oder Akkupacks 3 die jeweiligen Gerätekennwerte mit den korrespondierenden gerätespezifischen und/oder akkupackspezifischen Daten - insbesondere Identifikationswert, Messwert, Widerstandswert, Strommesswert, Bitfolge, Signal, Abschaltsignal, Gerätekennwert, Authentifizierungswert, Ladeparameter, Ladeverfahren, Abschaltkriterium, Akkupack-Parameter und/oder Ladegerät-Parameter - abgespeichert. Dies gewährleistet eine breite Kompatibilität des Adapters mit verschiedenen Ladegeräten 4 und Akkupacks 3. Eine umfassende Datenbank 17 erhöht die Flexibilität und Anpassungsfähigkeit des Systems 1, insbesondere Ladesystems.

Gemäß Figur 1, 2, 3 und 4 umfasst der Adapter 2 einen Adapter-Schalter 22. Der Adapter-Laderegler 11 ist außerdem so ausgebildet, dass er im bestimmungsgemäßen Gebrauch den Adapter-Schalter 22, insbesondere einen MOSFET und/oder Sperrwandler, unter Berücksichtigung des zumindest einen gerätespezifischen Ladegerät-Parameters und/oder akkupackspezifischen Akkupack-Parameters, insbesondere zum Reduzieren und/oder Unterbrechen des Ist-Ladestroms und/oder der Ist-Ladespannung, schalten und/oder steuern kann. Dies ermöglicht eine präzise Kontrolle des Stromflusses während des Ladevorgangs. Eine effektive Steuerung des Adapter-Schalters 22 erhöht die Sicherheit und Zuverlässigkeit des Systems 1.

Der Adapter 2 weist den Adapter-Schalter 22 auf, der vorzugsweise in der Stromleitung 9 angeordnet ist. Diese Anordnung ermöglicht eine direkte und effiziente Kontrolle des Stromflusses. Eine zentrale Platzierung des Adapter-Schalters 22 in der Stromleitung 9 verbessert die Reaktionsfähigkeit und Steuerbarkeit. Diese Anordnung ermöglicht eine effektive Kontrolle und Unterbrechung des Stromflusses bei Bedarf. Dies erhöht die Sicherheit und schützt vor möglichen Überlastungen.

Darüber hinaus umfasst der Adapter 2 eine vorliegend nicht dargestellte Anzeige zum Anzeigen des Ladezustands des Akkupacks 3 und/oder ein vorliegend ebenfalls nicht dargestelltes Betätigungselement zum Ein- und/oder Ausschalten der Anzeige. Die Anzeige liefert dem Benutzer Informationen über den aktuellen Ladezustand des Akkupacks 3. Eine klare und verständliche Anzeige verbessert die Benutzerfreundlichkeit und Überwachung des Ladevorgangs.

Zusätzlich umfasst der Adapter 2 zumindest eine Elektronikkomponente 12, insbesondere einen Microcontroller und/oder integrierten Schaltkreis, die die Adaptereinheit 10 und/oder den Datenspeicher 16 ausbildet. Diese Elektronikkomponente 12 ist zentral für die Verarbeitung und Steuerung aller Funktionen des Adapters 2. Die Elektronikkomponente 12 ist vorzugsweise ein UART-Microcontroller, der eine zuverlässige Kommunikation und Datenübertragung innerhalb des Systems 1 sicherstellt. Eine zuverlässige Datenübertragung ist essenziell für die korrekte Funktion und Steuerung des Ladevorgangs.

Zusammenfassend ist somit festzustellen,
- dass bei der in Figur 1 dargestellten Gerätekonstellation a) (d.h. Akkupack 3 ohne Akkupack-Laderegler 25 + Ladegerät 4 ohne Ladegerät-Laderegler 20)
   - der Adapter-Laderegler 11 des Adapters 2 den Soll-Ladestrom und/oder die Soll-Ladespannung in Abhängigkeit des zumindest einen Akkupack-Parameters und/oder Ladegerät-Parameters selber bestimmt und beim Ladegerät 4 anfordert; und/oder
   - der Adapter-Laderegler 11 des Adapters 2 den Ist-Ladestrom und/oder die Ist-Ladespannung vom Ladegerät 4 erhält; und/oder
   - der Adapter-Laderegler 11 des Adapters 2 den Ist-Ladestrom und/oder die Ist-Ladespannung über den Adapter-Schalter 22 gegebenenfalls nachregelt und/oder an das Akkupack 3 weiterleitet; und/oder
- dass bei der in Figur 2 dargestellten Gerätekonstellation b) (d.h. Akkupack 3 ohne Akkupack-Laderegler 25 + Ladegerät 4 mit Ladegerät-Laderegler 20)
   - der Adapter-Laderegler 11 des Adapters 2 den Soll-Ladestrom und/oder die Soll-Ladespannung in Abhängigkeit des zumindest einen Akkupack-Parameters und/oder Ladegerät-Parameters selber bestimmt und der Übersetzereinheit 23 übergibt; und/oder
   - die Übersetzereinheit 23 des Adapters 2 den vom Adapter-Laderegler 11 übermittelten Soll-Ladestrom und/oder die vom Adapter-Laderegler 11 übermittelte Soll-Ladespannung mittels eines, insbesondere aus der Datenbank 17 entnommenen, gerätespezifischen Ladegerät-Parameters in einen adaptierten Akkupack-Parameter übersetzt; und/oder
   - die Übersetzereinheit 23 des Adapters 2 den adaptierten Akkupack-Parameter an den Ladegerät-Laderegler 20 des Ladegeräts 4 übergibt; und/oder
   - der Ladegerät-Laderegler 20 des Ladegeräts 4 anhand des von der Übersetzereinheit 23 adaptierten Akkupack-Parameters einen Ist-Ladestrom und/oder eine Ist-Ladespannung bestimmt, der im Wesentlichen dem vom Adapter-Laderegler 11 bestimmten Soll-Ladestrom und/oder der vom Adapter-Laderegler 11 bestimmten Soll- Ladespannung entspricht; und/oder
   - der Adapter-Laderegler 11 des Adapters 2 den Ist-Ladestrom und/oder die Ist-Ladespannung vom Ladegerät 4 erhält; und/oder
   - der Adapter-Laderegler 11 des Adapters 2 den Ist-Ladestrom und/oder die Ist-Ladespannung über den Adapter-Schalter 22 gegebenenfalls nachregelt und/oder an das Akkupack 3 weiterleitet; und/oder
- dass bei der in Figur 3 dargestellten Gerätekonstellation c) (d.h. Akkupack 3 mit Akkupack-Laderegler 25 + Ladegerät 4 ohne Ladegerät-Laderegler 20)
   - der Akkupack-Laderegler 25 des Akkupacks 3 den Soll-Ladestrom und/oder die Soll-Ladespannung, insbesondere in Abhängigkeit eines variablen Ackupack-Parameters, selbst bestimmt und beim Adapter 2 anfordert; und/oder
   - der Adapter-Laderegler 11 des Adapters 2 den vom Akkupack-Laderegler 25 angeforderten Soll-Ladestrom und/oder die Soll-Ladespannung, insbesondere unverändert, übernimmt und/oder festlegt und beim Ladegerät 4 anfordert; und/oder
   - der Adapter-Laderegler 11 des Adapters 2 den Ist-Ladestrom und/oder die Ist-Ladespannung vom Ladegerät 4 erhält; und/oder
   - der Adapter-Laderegler 11 des Adapters 2 den Ist-Ladestrom und/oder die Ist-Ladespannung über den Adapter-Schalter 22 gegebenenfalls nachregelt und/oder an das Akkupack 3 weiterleitet; und/oder
- dass bei der in Figur 4 dargestellten Gerätekonstellation d) (d.h. Akkupack 3 mit Akkupack-Laderegler 25 + Ladegerät 4 mit Ladegerät-Laderegler 20)
   - der Akkupack-Laderegler 25 des Akkupacks 3 den Soll-Ladestrom und/oder die Soll-Ladespannung, insbesondere in Abhängigkeit eines variablen Ackupack-Parameters, selbst bestimmt und beim Adapter 2 anfordert; und/oder
   - der Adapter-Laderegler 11 des Adapters 2 den vom Akkupack-Laderegler 25 angeforderten Soll-Ladestrom und/oder die vom Akkupack-Laderegler 25 angeforderte Soll-Ladespannung, insbesondere unverändert, übernimmt und der Übersetzereinheit 23 übergibt; und/oder
   - die Übersetzereinheit 23 des Adapters 2 den vom Adapter-Laderegler 11 übermittelten Soll-Ladestrom und/oder die vom Adapter-Laderegler 11 übermittelte Soll-Ladespannung mittels eines, insbesondere aus der Datenbank 17 entnommenen, gerätespezifischen Ladegerät-Parameters in einen adaptierten Akkupack-Parameter übersetzt; und/oder
   - die Übersetzereinheit 23 des Adapters 2 den adaptierten Akkupack-Parameter an den Ladegerät-Laderegler 20 des Ladegeräts 4 übergibt; und/oder
   - der Ladegerät-Laderegler 20 des Ladegeräts 4 anhand des von der Übersetzereinheit 23 adaptierten Akkupack-Parameters einen Ist-Ladestrom und/oder eine Ist-Ladespannung bestimmt, der im Wesentlichen dem vom Akkupack-Laderegler 25 bestimmten und vom Adapter-Laderegler 11, insbesondere unverändert, übernommenen Soll-Ladestrom und/oder die im Wesentlichen der vom Akkupack-Laderegler 25 bestimmten und vom Adapter-Laderegler 11, insbesondere unverändert, übernommenen Soll-Ladespannung entspricht; und/oder
   - der Adapter-Laderegler 11 des Adapters 2 den Ist-Ladestrom und/oder die Ist-Ladespannung vom Ladegerät 4 erhält; und/oder
   - der Adapter-Laderegler 11 des Adapters 2 den Ist-Ladestrom und/oder die Ist-Ladespannung über den Adapter-Schalter 22 gegebenenfalls nachregelt und/oder an das Akkupack 3 weiterleitet.

### Bezugszeichenliste

- 1: System
- 2: Adapter
- 3: Akkupack
- 4: Ladegerät
- 5: Geräteschnittstelle des Adapters
- 6: Akkupackschnittstelle des Adapters
- 7: Geräteschnittstelle des Ladegeräts
- 8: Akkupackschnittstelle des Akkupacks
- 9: Stromleitung
- 10: elektronische Adaptereinheit
- 11: Adapter-Laderegler
- 12: Elektronikkomponente
- 13: erste Verbindungsleitung
- 14: zweite Verbindungsleitung
- 15: Identifikationseinheit
- 16: Datenspeicher
- 17: Datenbank
- 18: Authentifizierungseinheit
- 19: Ladeparametereinheit
- 20: Ladegerät-Laderegler
- 21: Adapter-Erfassungsmittel
- 22: Adapter-Schalter
- 23: Übersetzereinheit
- 24: Akkumulator
- 25: Akkupack-Laderegler
- 26: Akkupack-Schalter
- 27: Akkupack-Erfassungsmittel
- 28: Akkupackschutzsteuerung
- 29: Ladegerät-Steuerung

## Patentansprüche

1. Adapter (2), mit dem ein Akkupack (3) lösbar mit einem Ladegerät (4) verbunden werden kann,
mit einer Geräteschnittstelle (5) zum Verbinden des Ladegeräts (4) und/oder eines Elektrogeräts,
mit einer Akkupackschnittstelle (6) zum Verbinden des Akkupacks (3),
mit einer Stromleitung (9), die die Akkupackschnittstelle (6) und die Geräteschnittstelle (5) elektrisch miteinander verbindet, so dass zum Laden des Akkupacks (3) ein elektrischer Ladestrom vom Ladegerät (4) zum Akkupack (3) fließen kann,
**dadurch gekennzeichnet,**
**dass** der Adapter (2) eine elektronische Adaptereinheit (10) aufweist, die einen Adapter-Laderegler (11) zum Steuern, Überwachen und/oder Beenden eines Ladevorgangs zum Laden des Akkupacks (3) umfasst.

2. Adapter nach dem vorherigen Anspruch, **dadurch gekennzeichnet, dass** die elektronische Adaptereinheit (10) eine Identifikationseinheit (15) umfasst, mit der im bestimmungsgemäßen Gebrauch ein mit der Geräteschnittstelle (5) verbundenes Ladegerät (4) und/oder ein mit der Akkupackschnittstelle (6) verbundenes Akkupack (3), insbesondere anhand eines gerätespezifischen und/oder akkupackspezifischen Identifikationswertes, identifiziert werden kann.

3. Adapter nach einem der vorherigen Ansprüche, **dadurch gekennzeichnet, dass** die Identifikationseinheit (15) derart ausgebildet ist, dass diese im bestimmungsgemäßen Gebrauch den gerätespezifischen und/oder akkupackspezifischen Identifikationswert des angeschlossenen Ladegeräts (4) und/oder Akkupacks (3) mit mehreren Gerätekennwerten unterschiedlicher Ladegeräte (4) und/oder Ackupacks (3), die in einer Datenbank (17) eines Datenspeichers (16) abgespeichert sind, abgleichen kann und dass diese bei Übereinstimmung das angeschlossene Ladegerät (4) und/oder Akkupack (3) identifizieren kann.

4. Adapter nach einem der vorherigen Ansprüche, **dadurch gekennzeichnet, dass** die elektronische Adaptereinheit (10) eine Authentifizierungseinheit (18) umfasst, mit der sich der Adapter (2) im bestimmungsgemäßen Gebrauch beim verbundenen Ladegerät (4) und/oder Akkupack (3), insbesondere anhand eines gerätespezifischen und/oder akkupackspezifischen Authentifizierungswertes, authentifizieren kann;
wobei die Authentifizierungseinheit (18) vorzugsweise derart ausgebildet ist, dass diese im bestimmungsgemäßen Gebrauch den gerätespezifischen und/oder akkupackspezifischen Authentifizierungswert des angeschlossenen Ladegeräts (4) und/oder Akkupacks (3) anhand des mit dem gerätespezifischen und/oder akkupackspezifischen Identifikationswert übereinstimmenden Gerätekennwerts ermitteln kann, wobei der gerätespezifische Authentifizierungswert vorzugsweise gemeinsam mit dem korrespondierenden Gerätekennwert in der Datenbank (17) des Datenspeichers (16) abgespeichert ist; und/oder wobei die Authentifizierungseinheit (18) vorzugsweise derart ausgebildet ist, dass diese im bestimmungsgemäßen Gebrauch den ermittelten gerätespezifischen und/oder akkupackspezifischen Authentifizierungswert an das angeschlossene Ladegerät (4) und/oder den angeschlossenen Akkupack (3) übermitteln kann, um den Adapter (2) zu authentifizieren.

5. Adapter nach einem der vorherigen Ansprüche, **dadurch gekennzeichnet, dass** die elektronische Adaptereinheit (10) eine Ladeparametereinheit (19) umfasst, die im bestimmungsgemäßen Gebrauch zumindest einen Ladeparameter für den Ladevorgang zum Laden des angeschlossenen Akkupacks (3), insbesondere ein Ladeverfahren, ein Abschaltkriterium, eine maximale Ladespannung und/oder einen maximalen Ladestrom, ermitteln und/oder festlegen kann;
wobei die Ladeparametereinheit (19) vorzugsweise derart ausgebildet ist, dass diese den zumindest einen Ladeparameter anhand zumindest eines akkupackspezifischen Akkupack-Parameters des angeschlossenen Akkupacks (3) und/oder anhand zumindest eines gerätespezifischen Ladegerät-Parameters des angeschlossenen Ladegeräts (4) ermitteln und/oder festlegen kann; und/oder wobei die Ladeparametereinheit (19) vorzugsweise derart ausgebildet ist, dass diese im bestimmungsgemäßen Gebrauch den zumindest einen Akkupack-Parameter und/oder Ladegerät-Parameter anhand des mit dem gerätespezifischen und/oder akkupackspezifischen Identifikationswert übereinstimmenden Gerätekennwerts ermitteln kann, wobei der zumindest eine akkupackspezifische Ackupack-Parameter und/oder der zumindest eine gerätespezifische Ladegerät-Parameter vorzugsweise gemeinsam mit dem korrespondierenden Gerätekennwert in der Datenbank (17) des Datenspeichers (16) abgespeichert ist.

6. Adapter nach einem der vorherigen Ansprüche, **dadurch gekennzeichnet, dass** die Ladeparametereinheit (19) derart ausgebildet ist, dass diese im bestimmungsgemäßen Gebrauch den zumindest einen akkupackspezifischen Akkupack-Parameter und/oder gerätespezifischen Ladegerät-Parameter von dem angeschlossenen Akkupack (3) und/oder Ladegerät (4) ermitteln kann; und/oder dass die Ladeparametereinheit (19) derart ausgebildet ist, dass diese im bestimmungsgemäßen Gebrauch den zumindest einen festgelegten Ladeparameter an den Adapter-Laderegler (11) übermitteln und/oder den Adapter-Laderegler (11) initialisieren kann.

7. Adapter nach einem der vorherigen Ansprüche, **dadurch gekennzeichnet, dass** der Adapter-Laderegler (11) derart ausgebildet ist, dass dieser im bestimmungsgemäßen Gebrauch den Ladevorgang des angeschlossenen Akkupacks (3) unter Berücksichtigung des zumindest einen Ladeparameters steuern, überwachen und/oder beenden kann; und/oder
dass der Adapter-Laderegler (11) derart ausgebildet ist, dass dieser während des Ladevorgangs zumindest einen akkupackspezifischen Akkupack-Parameter und/oder gerätespezifischen Ladegerät-Parameter ermitteln kann, wobei der Adapter (2) zum Erfassen des zumindest einen Akkupack-Parameters und/oder Ladegerät-Parameters vorzugsweise zumindest ein Adapter-Erfassungsmittel (21) aufweist.

8. Adapter nach einem der vorherigen Ansprüche, **dadurch gekennzeichnet, dass** der Adapter-Laderegler (11) derart ausgebildet ist, dass dieser im bestimmungsgemäßen Gebrauch, insbesondere in Abhängigkeit des zumindest einen Akkupack-Parameters und/oder Ladegerät-Parameters, einen Soll-Ladestrom und/oder eine Soll-Ladespannung festlegen und/oder an das Ladegerät (4) übermitteln kann.

9. Adapter nach einem der vorherigen Ansprüche, **dadurch gekennzeichnet, dass** der Adapter-Laderegler (11) derart ausgebildet ist, dass dieser im bestimmungsgemäßen Gebrauch, wenn das angeschlossene Akkupack (3) einen Akkupack-Laderegler (25) umfasst, den vom Akkupack-Laderegler (25) angeforderten Ladestrom als Soll-Ladestrom festlegt und/oder die vom Akkupack-Laderegler (25) angeforderten Ladespannung als Soll-Ladespannung festlegt.

10. Adapter nach einem der vorherigen Ansprüche, **dadurch gekennzeichnet, dass** die elektronische Adaptereinheit (10) eine, insbesondere dem Adapter-Laderegler (11) nachgeschaltete Übersetzereinheit (23) umfasst, die vorzugsweise derart ausgebildet ist, dass diese im bestimmungsgemäßen Gebrauch, wenn das angeschlossene Ladegerät (4) einen Ladegerät-Laderegler (20) umfasst, anhand des gerätespezifischen Laderegler-Merkmals des Ladegerät-Ladereglers (20), insbesondere anhand eines gerätespezifischen Ladereglermodells, den vom Adapter-Laderegler (11) übermittelten Soll-Ladestrom und/oder die vom Adapter-Laderegler (11) übermittelte Soll-Ladespannung in einen derart adaptierten Akkupack-Parameter übersetzt, dass ein vom Ladegerät-Laderegler (20) an das Akkupack (3) gelieferter Ist-Ladestrom dem vom Adapter-Laderegler (11) festgelegten Soll-Ladestrom entspricht und/oder dass eine vom Ladegerät-Laderegler (20) an das Akkupack (3) gelieferte Ist-Ladespannung der vom Adapter-Laderegler (11) festgelegten Soll-Ladespannung entspricht.

11. Adapter nach einem der vorherigen Ansprüche, **dadurch gekennzeichnet, dass** die Übersetzereinheit (23) derart ausgebildet ist, dass diese im bestimmungsgemäßen Gebrauch das gerätespezifische Laderegler-Merkmal anhand des mit dem gerätespezifischen Identifikationswert übereinstimmenden Gerätekennwerts ermitteln kann, wobei das gerätespezifische Laderegler-Merkmal, vorzugsweise gemeinsam mit dem korrespondierenden Gerätekennwert, in der Datenbank (17) des Datenspeichers (16) abgespeichert ist.

12. Adapter nach einem der vorherigen Ansprüche, **dadurch gekennzeichnet, dass** in der Datenbank (17), insbesondere in einer Liste, für eine Vielzahl von unterschiedlichen Ladegeräten (4) und/oder Akkupacks (3) die jeweiligen Gerätekennwerte mit den korrespondierenden gerätespezifischen und/oder akkupackspezifischen Daten abgespeichert sind.

13. Adapter nach einem der vorherigen Ansprüche, **dadurch gekennzeichnet, dass** der Adapter (2) einen Adapter-Schalter (22), insbesondere einen MOSFET und/oder Sperrwandler, aufweist und/oder dass der Adapter-Laderegler (11) derart ausgebildet ist, dass dieser im bestimmungsgemäßen Gebrauch den Adapter-Schalter (22) unter Berücksichtigung des zumindest einen gerätespezifischen Ladegerät-Parameters und/oder akkupackspezifischen Akkupack-Parameters schalten und/oder steuern kann.

14. System (1) mit einem Adapter (2), einem Akkupack (3) und/oder einem Ladegerät (4), **dadurch gekennzeichnet, dass** der Adapter (2) gemäß einem der vorherigen Ansprüche ausgebildet ist.

15. Verwendung eines Akkupacks (3) gemäß Anspruch 1 in einem System (1) gemäß dem vorherigen Anspruch.
